(19) Europäisches Patentamt
European Patent Office
Office européen des brevets

(11) Publication number: **0 311 871 B1**

# (12) EUROPEAN PATENT SPECIFICATION

(45) Date of publication of patent specification: **29.12.93**

(51) Int. Cl.$^5$: **B32B 27/08**, B65D 65/40

(21) Application number: **88116377.8**

(22) Date of filing: **04.10.88**

The file contains technical information submitted after the application was filed and not included in this specification

## (54) Coextrusion structures.

(30) Priority: **13.10.87 US 108189**

(43) Date of publication of application:
**19.04.89 Bulletin 89/16**

(45) Publication of the grant of the patent:
**29.12.93 Bulletin 93/52**

(84) Designated Contracting States:
**DE FR GB IT**

(56) References cited:
**EP-A- 0 100 912**
**EP-A- 0 203 630**
**US-A- 3 908 070**
**US-A- 4 269 964**

(73) Proprietor: **MILES INC.**
**One Mellon Center**
**500 Grant Str.**
**Pittsburgh, PA 15219-2502(US)**

(72) Inventor: **Macy, Richard J.**
**336 Oakgrove Court**
**Wexford, PA 15090(US)**
Inventor: **Sarver, Larry D.**
**130 McCandless Place**
**Wexford, PA 15090(US)**

(74) Representative: **Gremm, Joachim, Dr. et al**
**Bayer AG**
**Konzernverwaltung RP**
**Patente Konzern**
**D-51368 Leverkusen (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 311 871 B1

## Description

### Field of the Invention

The invention relates to a multilayered thermoplastic structure having good vapor barrier properties and more particularly to a co-extruded structure comprising a polycarbonate layer, a polyvinylidene chloride layer and a tie (adhesive) layer interposted therebetween.

### Background of the Invention

Resistance to the permeaticn of gases and liquid is a required characteristic of modern packaging materials. In addition these materials are required to have good mechanical properties. While polycarbonate is an excellent material for molding a variety of plastic articles including films and packaging, its barrier properties are somewhat deficient. The combination of polyvinylidene chloride - a material known for its excellent barrier properties - with polycarbonate resins has been alluded to in the literature yet no successful co-extruded structure containing these materials has been reported. US-A- 3420729 disclosed an article comprising an outer shell and an inner rigidifier component and an adhesive layer placed therebetween. Polycarbonate is mentioned among the suitable materials for the outer shell. Polyvinylidene chloride (saran) is disclosed in US-A- 3561629, US-A- 3717544, US-A- 3908070 and US-A- 4107362 to be suitable as the intermediate layer in a laminated article. In US -A- 3606958 there was disclosed a container having a wall comprising a load-carrying lamina and a second, sealing lamina. Polycarbonate is listed among the materials suitable for the load-bearing lamina while polyvinylidene chloride is disclosed among the suitable materials for the fluid barrier laminae. Also relevant in this connection is the container disclosed in US -A- 3869056. In US-A- 4475241 there is disclosed a packaging film which comprises a base sheet having a polycarbonate coating and an adhesive tie layer.

It is perhaps instructive to note that the art regards the coextruded structure of polycarbonate and polyvinylidene to be an impossibility. In a paper entitled "Materials and Components for High Temperature Barrier Packaging, "L. E. Baccaro et al (1984 Polymers, Lamination and Coatings Conference, Book 2, Proceedings of the Technical Association of the Pulp and Paper Industry, pp 639) it was noted that among the drawbacks of polyvinylidene chloride is that "with the current coextrusion feedblock system on the market, it is virtually impossible to process with PC without degradation". In fact, as late as 1987 in an article entitled "A Comparison of Barrier Plastics for Packaging; The packaging composites of EVOH and PVDC" by M. Boysen, Rheinberg, Kunststoffe 77 (1987) 5,pp. 522/525, it was clearly stated that coextrusion of PVDC and polycarbonates is not possible.

### SUMMARY OF THE INVENTION

The present invention is directed to a novel, coextruded multi layered structure consisting of the following succesive layers: polycarbonate, adhesive, barrier layer, adhesive, polycarbonate

(I) said barrier layer comprising a copolymer containing at least 70 weight % vinylidinechloride units and one or more olefin units or substituted olefin units,

(II) said polycarbonate being characterized in that its weight average molecular weight is 10 000 to 40 000

(III) said adhesive layer has to have a process temperature of less than 177 °C (350 °F),

said adhesive layer comprising a copolymer of ethylene and at least one monomer selected from the group consisting of acrylic acid, methacrylic acid, and acetic acid and the corresponding esters and must contain less than about 0,5 ppm of metal ions.

### DETAILED DESCRIPTION OF THE INVENTION

The polycarbonates of the present invention are thermoplastic aromatic resins having a weight average molecular weight of about 10,000 to about 40,000, particularly 12,000 to 30,000 and preferably 15,000 to 25,000. Polycarbonates of this type are known and are readily available in commerce. The polycarbonate resin of the invention is based on dihydroxy compounds of the formula

HO - Z -OH (II)

wherein Z is a divalent aromatic radical having 6-30 carbon atoms. These include both mononuclear and

polynuclear dihydroxy compounds, which may contain heteroatoms and may be substituted. The following are among the suitable compounds: hydroquinone, resorcinol, dihydroxydiphenyls, bis-(hydroxyphenyl)-alkanes, bis-(hydroxyphenyl)-cycloalkanes, bis-(hydroxyphenyl) sulphides, bis-(hydroxyphenyl) ethers, bis-(hydroxyphenyl) ketones, bis-(hydroxyphenyl) sulphoxides, bis-(hydroxyphenyl) sulphones and α,α'-bis-(hydroxyphenyl)-diisopropylbenzenes, and their nuclear-alkylated and nuclear-halogenated compounds. These and other suitable dihydroxy compounds are described in U.S. Pat. Nos. 3,028,365; 2,999,835; 3,148,172; 2,991,273; 3,271,367 and 2,999,846, all of which are incorporated herein by reference, in German Offenlegungsschriften Nos. 1,570,703; 2,063,050; 2,036,052; and 2,211,956; French Patent Specification No. 1,561,518 and in the monograph H. Schnell, Chemistry and Physics of Polycarbonates, Interscience Publishers, New York, 1964.

Examples of preferred dihydroxy compounds are: 4,4'-dihydroxydiphenyl, 2,2-bis-(4-hydroxyphenyl)-propane, 2,4-bis-(4-hydroxyphenyl)-2-methylbutane, 1,1-bis-(4-hydroxyphenyl)-cyclohexane, α,α'-bis-(4-hydroxyphenyl)-p-diisopropylbenzene, 2,2-bis-(3-methyl-4-hydroxyphenyl)-propane, 2,2-bis-(3-chloro-4-hydroxyphenyl)-propane, bis-(3,5-dimethyl-4-hydroxyphenyl)-methane, 2,2-bis-(3,5-dimethyl-4-hydroxyphenyl)-propane, bis-(3,5-dimethyl-4-hydroxyphenyl) sulphone, 2,4-bis-(3,5-dimethyl-4-hydroxyphenyl)-2-methylbutane, 1,1-bis-(3,5-dimethyl-4-hydroxyphenyl)-cyclohexane, α,α'-bis-(3,5-dimethyl-4-hydroxyphenyl)-p-diisopropyl-benzene, 2,2-bis-(3,5-dichloro-4-hydroxyphenyl)-propane, and 2,2-bis-(3,5-dibromo-4-hydroxyphenyl)-propane.

Examples of particularly preferred dihydroxy compounds are: 2,2-bis-(4-hydroxyphenyl)-propane, 2,2-bis-(3,5-dimethyl-4-hydroxyphenyl)-propane, 2,2-bis-(3,5-dichloro-4-hydroxyphenyl)-propane, 2,2-bis-(3,5-dibromo-4-hydroxyphenyl)-propane, and 1,1-bis-(4-hydroxyphenyl)-cyclohexane.

Mixtures of the above mentioned dihydroxy compounds may also be used.

Small amounts of a branching agent, preferably between about 0.05 and 2.0 mol % (relative to diphenols employed) may be added. These are compounds having a functionality of three or more, in particular those with three or more phenolic hydroxyl groups, which are added for the purpose of improving the flow properties. Examples of these compounds include phloroglucinol, 4,6-dimethyl-2,4,6-tri-(4-hydroxyphenyl)-hept-2-ene, 4,6-dimethyl-2,4,6-(4-hydroxyphenyl)-heptane, 1,3,5-tri-(4-hydroxyphenyl)-benzene, 1,1,1-tri-(4-hydroxyphenyl)-ethane, tri-(4-hydroxyphenyl)-phenylmethane, 2,2-bis-[4,4-bis-(4-hydroxyphenyl)-cyclohexyl]-propane, 2,4-bis-(4-hydroxyphenylisopropyl)-phenol, 2,6-bis-(2-hydroxy-5'-methylbenzyl)-4-methylphenol, 2-(4-hydroxyphenyl)-2-(2,4-dihydroxyphenyl)-propane, hexa-[4-(4-hydroxyphenylisopropyl)-phenyl] orthoterephthalic acid ester, tetra-(4-hydroxyphenyl)-methane, tetra-[4-(4-hydroxyphenylisopropyl) phenoxyl-methane and 1,4-bis-[(4',4''-dihydroxy-triphenyl)-methyl]-benzene. Other suitable trifunctional compound are 2,4-dihydroxybenzoic acid, trimesic acid, cyanuric chloride and 3,3-bis-(3-methyl-4-hydroxyphenyl)-2-oxo-2,3-dihydroindole.

The polycarbonates according to the invention are preferably prepared by the phase boundary process (as described for instance in H. Schnell, Chemistry and Physics of Polycarbonates, Polymer Reviews, Volume IX, page 33 et. seq., Interscience Publishers, (1964)), incorporated herein by reference.

Regulating the molecular weight of the polycarbonate resin is attained by use of monohydric aromatic hydroxy compounds. These are well known and include monophenols such as cumylphenol, m- and p-methylphenol, m- and p-ethylphenol, m- and p-propylphenol and m- and p-isopropylphenol, p-bromophenol and m- and p-butylphenol, especially p-tert. butylphenol. The preferred embodiments entail a polycarbonate resin having chain terminators comforming to

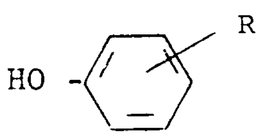

(I)

wherein R represents a branched alkyl radical consisting of 4 to 10 carbon atoms. Most preferred polycarbonate resins having chain terminators of this type have been disclosed in U.S. Patent 4,269,964 which is incorporated herein by reference. The preferred polycarbonates represent an improvement in terms of hydrolysis resistance, critical thickness and mechanical and thermal properties.

Examples of compounds of formula I which are suitable according to the invention are

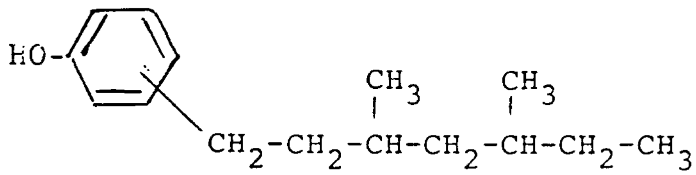

(III)

and

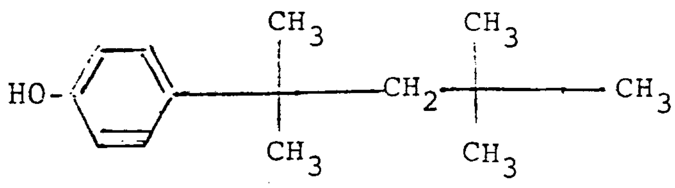

(IV)

Either one compound of formula I or a mixture comprising compounds of formula I may be employed for the preparation of the polycarbonates according to the invention.

Polyvinylidene chloride polymers and copolymers are well known and widely used barrier materials. The barrier resins of the invention are polymers containing at least 70 weight % vinylidinechloride units and one or more olefin units or substituted olefin units.

Vinylidene chloride is a vinyl monomer which conforms structurally to

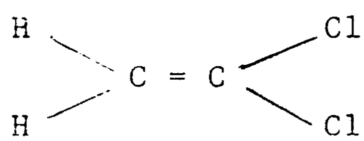

and which upon copolymerization form a variety of useful resins. Saran, a representative resin of this family of resins, is characterized by its low permeability to gases and liquids and flammability resistance.

In the context of the present invention, the barrier layer is preferably a copolymer of vinylidene chloride having a melt point of about 198 to 205 °C and a decomposition temperature of about 210 °C.

The barrier material of the invention comprises at least 70 weight percent of vinylidene chloride, the remainder being of one or more of the suitable copolymerizable monomers selected among olefins and substituted olefins including such monomers as unsaturated carboxylic acids, methyl, ethyl, isobutyl, butyl, octyl and 2-ethylhexyl acrylates and methacrylates, phenyl methacrylate, Cyclohexyl methacrylate, p-cyclohexyl phenyl methacrylate, chloroethyl methacrylate, 2-nitro-2-methylpropyl methacrylate and the corresponding esters of acrylic acid, methyl alpha chloroacrylate, octyl alpha-chloro-acrylate, methyl isopropenyl ketone, acrylonitrile, methacrylonitrile, methyl vinyl ketone, vinyl chloride, vinyl acetate, vinyl propionate, vinyl chloroacetate, vinyl bromide, styrene, vinyl naphthalene, ethyl vinyl ether, N-vinyl phthalimide, N-vinyl succinimide, N-vinyl carbazole, isopropenyl acetate, acrylamide, methacrylamide or monoalkyl substitution products thereof, phenyl vinyl ketone, diethyl fumarate, diethyl maleate, methylene diethyl maleate, dichloro vinylidene fluoride, dimethyl itaconate, diethyl itaconate, dibutyl itaconate, vinyl pyridine, maleic anhydride and allyl glycidyl ether.

Since its transmission properties are virtually uneffected by moisture or steam, the barrier resin is ideal for use in food packaging applications. Unfortunately, however, the color of this resin is heat sensitive such that it turns amber-beige upon exposure to a temperature higher than about 177 °C (350 °F) Further, at high temperatures, polyvinylidene chloride undergoes degradation which yields highly corrosive hydrochloric acid.

Polyvinylidene chloride resins are noted for their resistance to gas and liquid permeation. Oxygen permeabilities at 23 °C range from about $0.138 \times 10^{-16}$ to $3.45 \times 10^{-16}$ cc.cm/645 $cm^2$ sec.Pa (0.04 to 1.0 cc-mil/100 $in.^2$ - day- atm.) and are uneffected by the presence of moisture. Carbon dioxide permeabilities are about 0.1 to 2.4 cc. The permeation of n-hexane is about $1.22 \times 10^{-12}$ - $1.22 \times 10^{-13}$ g.cm/645 $cm^2$ sec

($10^{-3}$ - $10^{-4}$ g-mil/100 in.$^2$ - day), while water vapor transmission rates are 0.05 to 0.5 g at 37.8 °C and 90% relative humidity. Among the preferred polyvinylidene chloride resins suitable in the present application is Experimental PVDC Resin XU-32009.00, a product of the Dow Chemical Company. It is characterized by its barrier properties which are summarized as: Oxygen transmission 5.17 × $10^{-17}$ cc.cm/645 cm$^2$ sec.Pa at 23 °C (0.15 cc-mil/100 in.$^2$ 24 hrs. atm @ 73 °F) and 75% RH, ASTM D-1434, water vapor transmission rate 1.22 × $10^{-10}$ g.cm/645 cm$^2$ sec at 37.8 °C (0.10 g mil/100 in.$^2$ 24 hrs. @ 100 °F)and 90% RH, ASTM D-96 and permeability to carbon dioxide 0.86 × $10^{-16}$ cc.cm/645 cm$^2$ sec Pa (0.25 cc-mil/100 in.$^2$ 24 hrs. atm) @ RT.

The barrier properties of the polyvinylidene chloride layer depends on its thickness. In the context of the present invention the trade-off between economics and properties dictates that the thicknesses of the polyvinylidene chloride layer be of the order of about 0.00254 cm (0.001") to about 0.0381 cm (0.015"), preferably the thickness is about 0.0168 cm (0.0066") to about 0.03048 cm (0.012"). Excellent properties were obtained in a structure which included a polycarbonate layer 0.0127 cm (0.005"), an adhesive layer 0.00762 cm (0.003") and polyvinylidene chloride 0.0254 cm (0.010").

Typical plasticizers which may be incorporated in the polyvinylidene chloride barrier resin include acetyl tributyl citrate, epoxidized soybean oil, dibutyl sebacate and copolymers of ethylene and vinyl acetate.

The adhesive, tie, layer of the invention serves also as a thermal insulator to at least partially protect the polyvinylidene chloride layer from the high temperatures attendant upon the coextrusion process. Typically the thickness of the adhesive layer is about 0.00127 cm (0.0005") to 0.0127 cm (0.005"), preferably about 0.00254 cm (0.001) to 0.00762 cm (0.003 inches). For an adhesive layer to be suitable in the present context it has to have a relatively low process temperature (less than 177 °C (350 °F)) and adhere to and be compatible with both the polyvinylidene chloride and the polycarbonate. Further it must contain less than about 0.5 ppm of metal ions. Among the suitable resins are copolymers of ethylene and vinyl acetate containing about 14 to 40 percent of vinyl acetate and a complementary percentage of ethylene. Also suitable are copolymers of ethylene and acrylate or methacrylic acid esters containing about 30 percent of acrylate or methacrylate and a complementary percentage of ethylene.

The coextrusion process is well known in the art. Any of a number of processes, including the use of a Dow block, Welex block, and a multimanifold die are suitable. In the preparation of the structure described below, use was made of a Cloeren coextrusion block. See for instance U.S. Patent 4,600,550. The structures thus produced are suitable in the preparation of containers, films, or sheets where excellent barrier properties are desired.

Structures within the scope of the invention have been prepared and their properties evaluated. Along the suitable structures there was prepared a coextruded sheet consisting of the following succesive layers: polycarbonate, adhesive barrier layer, adhesive, polycarbonate. In these structures the adhesive layer was Plexar 3342® and the barrier layer was Dow Chemicals XU 32009.05®. The polycarbonate was a homopolymer based on bisphenol-A having a molecular weight of about 25,000,characterized in that its chain terminator conforms to formula (I) above. The melt temperature of the polycarbonate was about 221 °C (430 °F) (measured at the center of the die).

The structure coextruded in accordance with the invention may contain additional coextruded layers including conventional polycarbonate resins as long as the additional layers are separated from the polyvinylidene chloride layer by the polycarbonate resin of the invention.

In coextruding the structure of the invention it is important to operate the polycarbonate extruder at a low to medium shear screw and at a low rpm in order to maintain as low a melt temperature as possible. Preferably, the speed should be below 40 rpm. It is also important that the screw in the polycarbonate extruder contain no high-shear mixing elements, i.e., Maddox. In addition the following should be noted:

the polyvinylidene chloride must have a short residence time in the extruder adapter and die in order to minimize degradation.

The flow rate of the combined, multilayer structure through the coextrusion adapter and die or through the multimanifold die should be high, to minimize residence time.

The extruded multilayer melt must be cooled immediately. The conventional technique is to extrude onto a temperature controlled metal roll such as a 3-roll stack. The contact roll, center roll in this case, should have a cooler temperature than would normally be used for polycarbonate; a 30 °C difference is desirable.

The adhesive layer must be thick enough to insulate the barrier layer from the polycarbonate layer from the time the layers come together until they are cooled on the roll stack; a typical thickness is 50.8 µm (2 mils.)

The parameters set forth below describe the coextrusion process which was used in demonstrating the invention.

Equipment:

Extruder A: Davis Standard 6.35 cm (2 1/2"), 30:1 unvented extruder, medium shear screw.
Extruder B: Davis Standard 6.35 cm (2 1/2"), 30:1 unvented extruder, low shear screw.
Extruder C: Davis Standard 3.81 cm (1 1/2"), 24:1 unvented extruder
Extruder D: Davis Standard 3.81 cm (1 1/2"), 24:1

| Extruder | A | B | C | D |
|---|---|---|---|---|
| Material | Polycarbonate | Polycarbonate | Plexar 3342® | Dow Chemicals® XU 32009.05 |
| Temp Zone 1, °C (°F) | 243 (470) | 243 (470) | 177 (350) | 163 (325) |
| 2, " (°F) | 240 (465) | 243 (470) | 171 (340) | 149 (300) |
| 3, " (°F) | 227 (440) | 227 (440) | 171 (340) | 149 (300) |
| 4, " (°F) | 227 (440) | 227 (440) | 171 (340) | 149 (300) |
| Clamp " (°F) | 227 (440) | 227 (440) | 171 (340) | 149 (300) |
| Adapter " (°F) | 227 (440) | 227 (440) | --- | 149 (300) |
| Feed Block " (°F) | 210 (410) | | | |
| Feed Block, " (°F) | 210 (410) | | | |
| Die 1, " (°F) | 221 (430) | | | |
| Die 2, " (°F) | 221 (430) | | | |
| Die 3, " (°F) | 221 (430) | | | |
| Roll Temp., | | | | |
| Top " (°F) | 93 (200) | | | |
| Middle " (°F) | 80 (175) | | | |
| Bottom " (°F) | 93 (200) | | | |

## Claims

**1.** A coextruded multi layered structure consisting of the following successive layers: polycarbonate adhesive, barrier layer, adhesive, polycarbonate

(I) said barrier layer comprising a copolymer containing at least 70 weight % vinylidinechloride units and one or more olefin units or substituted olefin units,

(II) said polycarbonate being characterized in that its weight average molecular weight is 10 000 to 40 000

(III) and wherein said adhesive layer has to have a process temperature of less than 177 °C (350 °F), and must contain less than about 0,5 ppm of metal ions.

**2.** The structure of claim 1, wherein said polycarbonate is characterised in that its chain stopper conforms to

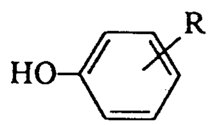

wherein R denotes a branched $C_4$-$C_{10}$-alkyl radical.

**3.** The structure of claim 2, wherein said chain stopper conforms to

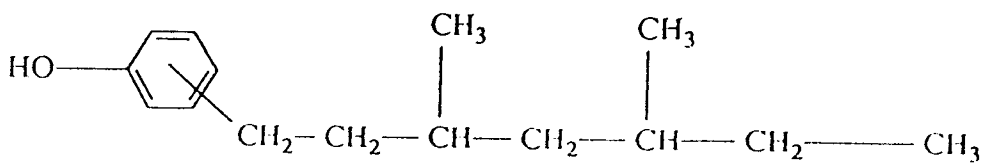

said adhesive layer comprising a copolymer of ethylene and at least one monomer selected from the group consisting of acrylic acid, methacrylic acid, and acetic acid and the corresponding esters

**4.** The structure of claim 2, wherein said chain stopper conforms to

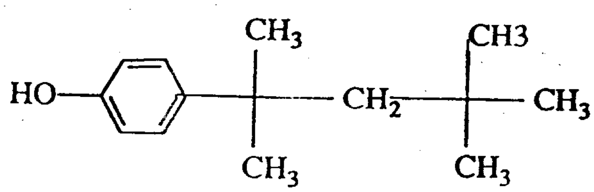

## Patentansprüche

**1.** Coextrudierte mehrschichtige Struktur, bestehend, der Reihe nach, aus den folgenden Schichten: Polycarbonat, Klebstoff, Sperrschicht, Klebstoff, Polycarbonat,

(I) worin die Sperrschicht aus einem Copolymer besteht, das wenigstens 70 Gew. -% Vinylidenchlorid-Einheiten und Einheiten eines oder mehrerer Olefine oder Einheiten substituierter Olefine enthält,

(II) das Polycarbonat dadurch gekennzeichnet ist, daß das Gewichtsmittel seines Molekulargewichts 10 000 bis 40 000 beträgt, und worin

(III) die Klebstoff-Schicht eine Verarbeitungstemperatur von weniger als 177 °C (350 °F) hat, die Klebstoff-Schicht ein Copolymer aus Ethylen und und wenigstens einem Monomer, das aus der Acrylsäure, Methacrylsäure und Essigsäure und den entsprechenden Estern ausgewählt ist, umfaßt und weniger als etwa 0,5 ppm Metall-Ionen enthalten muß.

2. Struktur nach Anspruch 1, worin das Polycarbonat dadurch gekennzeichnet ist, daß seine Kettenabbruch-Einheit

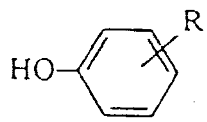

entspricht, worin R einen verzweigten $C_4$-$C_{10}$-Alkyl-Rest bezeichnet.

3. Struktur nach Anspruch 2, worin die Kettenabbruch-Einheit

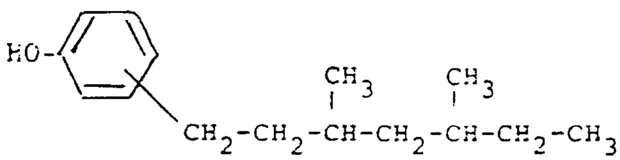

entspricht.

4. Struktur nach Anspruch 2, worin die Kettenabbruch-Einheit

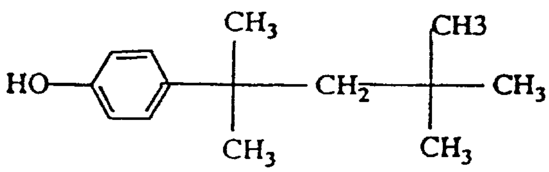

entspricht.

## Revendications

1. Structure multicouche coextrudée, consistant en les couches successives suivantes : un polycarbonate, un adhésif, une couche d'arrêt, un adhésif, un polycarbonate,
   (I) ladite couche d'arrêt comprenant un copolymère contenant au moins 70 % en poids de motifs chlorure de vinylidine et un ou plusieurs motifs oléfiniques ou motifs oléfiniques substitués,
   (II) ledit polycarbonate étant caractérisé en ce qu'il possède une moyenne pondérale du poids moléculaire de 10 000 à 40 000,
   (III) ladite couche adhésive devant posséder une température de traitement inférieure à 177 °C (350 °F), ladite couche adhésive comprenant un copolymère d'éthylène et d'au moins un monomère choisi dans le groupe consistant en acide acrylique, acide méthacrylique et acide acétique et les esters correspondants et devant contenir moins d'environ 0,5 ppm d'ions métalliques.

2. Structure suivant la revendication 1, dans laquelle le polycarbonate est caractérisé en ce que son agent de terminaison de chaîne répond à la formule

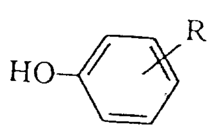

dans laquelle R représente un radical alkyle ramifié en $C_4$ à $C_{10}$.

**3.** Structure suivant la revendication 2, dans laquelle l'agent de terminaison de chaîne répond à la formule

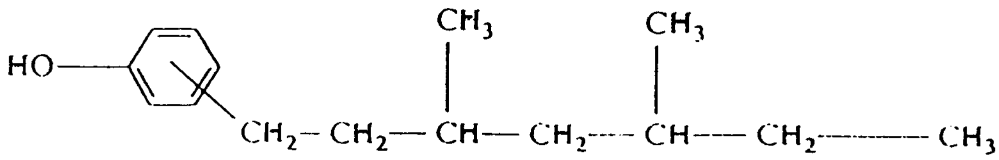

**4.** Structure suivant la revendication 2, dans laquelle l'agent de terminaison de chaîne répond à la formule